# DEMANDE DE BREVET EUROPEEN

(11) **EP 1 188 864 A1**
(43) Date de publication de la demande: **20.03.2002**
(21) Numéro de dépôt: 01402367.5
(22) Date de dépôt: 14.09.2001
(51) Int. Cl.: E02F 5/10, G02B 6/44, H02G 1/06

(54) **Procédé de pose dans une chaussée d'éléments allongés destinés à permettre de véhiculer des flux**

(30) Priorité: 14.09.2000 FR 0011728
(71) Demandeur: Eurovia, 92500 Rueil-Malmaison (FR)
(72) Inventeur: Moutet, Jean-Luc, Alain, 78490 Montfort l'Amaury (FR)
(74) Mandataire: Colas, Jean-Pierre

(57) **Abrégé**

Ce procédé de pose d'élément(s) allongé(s) (8, 9) destiné(s) à permettre de véhiculer des flux, tels que des fourreaux pour câbles de télécommunications, dans une chaussée (C) comprenant au moins une couche de structure (3, 5) reposant sur un sol d'assise (7), comportant les étapes consistant à :
- réaliser au moins une saignée longitudinale (11) dans ladite couche de structure (3, 5) sans empiéter sur ledit sol d'assise (7),
- déposer ledit (lesdits) élément(s) allongé(s) (8, 9) dans ladite au moins une saignée (11), et à
- remplir au moins partiellement ladite au moins une saignée (11) avec un matériau de rebouchage (13),
est remarquable en ce qu'on réalise ladite au moins une saignée (11) dans la zone de roulement de ladite chaussée.

## Description

La présente invention se rapporte à un procédé de pose dans une chaussée d'éléments allongés destinés à permettre de véhiculer des flux.

On connaît de la technique antérieure trois procédés de pose d'élément(s) allongé(s) destiné(s) à permettre de véhiculer des flux, tels que des fourreaux pour câbles de télécommunications, dans une chaussée comprenant au moins une couche de structure reposant sur un sol d'assise.

Dans le premier procédé, relativement ancien, on réalise une saignée longitudinale s'étendant sur toute la hauteur du corps de chaussée (couche de roulement + couches de structure) ainsi que sur une partie de la hauteur du sol d'assise supportant ce corps de chaussée.

On dépose ensuite les éléments allongés au fond de cette saignée, c'est-à-dire en fait dans une partie de cette saignée qui est située dans le sol d'assise.

Ce procédé présente comme principal avantage de permettre d'enterrer profondément les éléments allongés, et ainsi de les protéger des agressions extérieures.

Toutefois, ce procédé présente comme principal inconvénient de modifier à la fois les couches de structure de la chaussée et le sol d'assise, au risque d'entraîner des désordres dans la chaussée sous l'effet de la circulation et de détériorer les ouvrages précédemment enterrés.

Dans le deuxième procédé, enseigné par le document FR 2 750 717 et adapté lorsque la chaussée comprend une couche de roulement, on réalise une saignée longitudinale s'étendant uniquement sur la hauteur de cette couche de roulement.

Ce procédé présente comme principal avantage de ne pas destructurer le sol d'assise supportant le corps de chaussée.

Toutefois, dans ce procédé, on dispose les éléments allongés pour ainsi dire à fleur de chaussée, de sorte qu'il existe un réel risque de mise à nu de ces éléments sous l'effet de l'usure liée à la circulation, ou de détérioration en cas d'accident.

Dans le troisième procédé, adapté lorsque la chaussée comprend une bande d'arrêt d'urgence et/ou un terre-plein central, on réalise une saignée longitudinale dans la couche de structure de cette bande d'arrêt et/ou de ce terre-plein, sans empiéter sur le sol d'assise.

Dans ce troisième procédé, on réalise donc une saignée moins profonde que dans le premier procédé et plus profonde que dans le deuxième procédé, ce qui constitue un compromis permettant de combiner les avantages de ces procédés tout en en supprimant les inconvénients.

Le fait de réaliser en outre la saignée dans une zone peu circulée de la chaussée (bande d'arrêt d'urgence et/ou terre-plein central) permet de limiter le trafic au droit de cette saignée et donc les sollicitations susceptibles d'engendrer des désordres.

Toutefois, ce troisième procédé ne peut être mis en oeuvre que lorsqu'il existe effectivement une bande d'arrêt d'urgence et/ou un terre-plein central, et lorsque cette bande d'arrêt et/ou ce terre-plein n'est pas déjà saturé d'ouvrages enterrés.

La présente invention a pour but de fournir un procédé qui présente les avantages de ce troisième procédé sans en présenter les inconvénients.

On atteint ce but de l'invention avec un procédé de pose d'élément(s) allongé(s) destiné(s) à permettre de véhiculer des flux, tels que des fourreaux pour câbles de télécommunications, dans une chaussée comprenant au moins une couche de structure reposant sur un sol d'assise, comportant les étapes consistant à:
- réaliser au moins une saignée longitudinale dans ladite couche de structure sans empiéter sur ledit sol d'assise,
- déposer ledit (lesdits) élément(s) allongé(s) dans ladite au moins une saignée, et à
- remplir au moins partiellement ladite au moins une saignée avec un matériau de rebouchage,
remarquable en ce qu'on réalise ladite au moins une saignée dans la zone de roulement de ladite chaussée.

Grâce à ces caractéristiques, on pose les éléments allongés dans la zone de la chaussée qui est soumise à la circulation des véhicules, ce qui rend cette pose toujours possible, qu'il y ait ou non de bande d'arrêt d'urgence et/ou de terre-plein central, et que cette bande d'arrêt et/ou ce terre-plein soit saturé ou non d'ouvrages enterrés.

Des essais ont montré de manière surprenante que le fait de réaliser la saignée dans la zone de roulement de la chaussée n'était pas susceptible de donner naissance à des désordres notables.

On s'est donc rendu compte que le fait de croire qu'il était nécessaire de réaliser la saignée dans une zone peu circulée de la chaussée n'était en fait qu'un préjugé de la technique antérieure.

Suivant d'autres caractéristiques du procédé selon l'invention :
- lorsque ladite chaussée comprend uniquement ladite au moins une couche de structure, ce procédé comprend l'étape finale consistant à terminer le remplissage de ladite au moins une saignée au moyen d'un produit susceptible de régénérer les qualités de surface de ladite chaussée nécessaires au trafic automobile,
- lorsque ladite chaussée comprend en outre une couche de roulement située au-dessus de ladite au moins une couche de structure, ce procédé comprend en outre l'étape préalable consistant à raboter ou à scier ladite couche de roulement le long de l'emplacement de ladite au moins une saignée, et les étapes finales consistant à remplir complètement ladite au moins une saignée avec ledit matériau de rebouchage et à refaire ladite couche de roulement au-dessus de ladite au moins une saignée,
- ce procédé comprend l'étape supplémentaire consistant à disposer une nappe d'un matériau choisi dans le groupe comprenant les non-tissés et les matières plastiques au-dessus de ladite au moins une saignée préalablement à la réfection de ladite couche de roulement,
- on étend ladite nappe sur une largeur sensiblement égale à deux fois la largeur de ladite au moins une saignée,
- ce procédé comprend l'étape supplémentaire consistant à placer des moyens de repérage dudit (desdits) élément(s) allongé(s) préalablement au rebouchage de ladite au moins une saignée,
- on réalise ladite au moins une saignée de manière que sa largeur soit légèrement supérieure à celle dudit (desdits) élément(s) allongé(s),
- on réalise ladite au moins une saignée de manière que la hauteur séparant ledit (lesdits) élément(s) allongé(s) de la partie supérieure de ladite au moins une couche de structure soit comprise entre 5 et 20 cm,
- on réalise une pluralité de saignées sensiblement parallèles entre elles dans ladite au moins une couche de structure,
- on espace lesdites saignées d'au moins 30 cm.

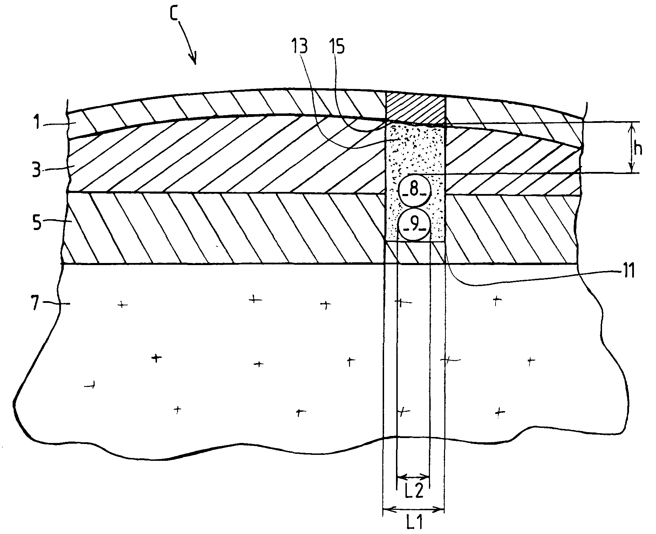

D'autres caractéristiques et avantages de la présente invention apparaîtront à la lecture de la description qui va suivre et à l'examen du dessin annexé, dans lequel l'unique figure est une vue en coupe transversale d'une chaussée renfermant des éléments allongés posés selon le procédé de la présente invention.

On se reporte à présent à cette figure, sur laquelle on a représenté une chaussée C comprenant, typiquement, du haut vers le bas : une couche de roulement 1 formée par exemple en béton bitumineux, deux couches de structure 3, 5 formées par exemple en graves bitumineuses, et un sol d'assise 7 formé dans un matériau tel qu'une grave présentant une granulométrie appropriée.

L'homme du métier désigne couramment par « corps de chaussée » l'ensemble formé par la couche de roulement 1 et les deux couches de structure 3, 5.

On a représenté sur la figure deux éléments allongés 8, 9 tels que des fourreaux pour câbles de télécommunications s'étendant longitudinalement (c'est-à-dire perpendiculairement au plan de la feuille de dessin) à l'intérieur de la chaussée.

Ces fourreaux sont placés à l'intérieur d'une saignée 11 remplie avec un matériau de rebouchage 13 tel qu'un béton hydraulique ou une grave traitée présentant une granulométrie appropriée.

La saignée 11 s'étend uniquement dans les couches de structure 3, 5, et pas dans le sol d'assise 7.

Selon une caractéristique essentielle de l'invention, la saignée 11 s'étend dans la zone de roulement de la chaussée C, c'est-à-dire dans la zone de cette chaussée qui est destinée à recevoir la circulation automobile.

Au dessus de cette saignée, la couche de roulement 1 a été refaite.

En variante (non représentée), si la chaussée C ne comprenait pas de couche de roulement, comme par exemple si le corps de chaussée était en béton, la saignée pourrait être remplie, dans sa partie supérieure, par un produit susceptible de restituer les qualités de surface de la chaussée.

Lorsque la couche de roulement 1 est relativement mince (épaisseur inférieure à 2 cm typiquement), une nappe 15 d'un matériau choisi dans le groupe comprenant les non-tissés et les matières plastiques peut être disposée au-dessus de la saignée 11, sous la couche de roulement 1.

De manière préférée, cette nappe s'étend sur une largeur sensiblement égale à deux fois la largeur L1 de la saignée 11.

Des moyens de repérage tels que des filets colorés ou des câbles métalliques (non représentés) peuvent également être disposés au voisinage des éléments allongés 8, 9.

De manière préférée, et comme cela est représenté sur la figure, la saignée 11 est réalisée de manière que sa largeur L1 soit légèrement supérieure à celle L2 des éléments allongés 8, 9.

De manière préférée également, on réalise la saignée 11 de manière que la hauteur h séparant les éléments allongés 8, 9 de la partie supérieure des couches de structure 3, 5 soit comprise entre 5 et 20 cm.

Bien entendu, plusieurs saignées peuvent être réalisées dans la chaussée C, parallèlement les unes aux autres, chacune de ces saignées pouvant renfermer des éléments allongés d'une catégorie particulière : fourreaux de télécommunications, câbles électriques, etc.

Dans ce cas, ces saignées seront de préférence séparées les unes des autres d'environ 30 cm.

Le procédé de pose des éléments allongés 8, 9 dans la chaussée C résulte directement de ce qui précède.

Lorsque la chaussée C comprend une couche de roulement 1, on commence par raboter ou scier cette couche le long de l'emplacement de la saignée 11, dans la zone de roulement de la chaussée C.

On réalise ensuite la saignée 11 dans les couches de structure 3, 5 sur la longueur voulue.

On prend bien soin d'éviter que la saignée 11 n'atteigne le sol d'assise 7.

On dépose ensuite les éléments allongés 8, 9 au fond de cette saignée et on la remplit avec le matériau de rebouchage 13.

Le cas échéant, on place la nappe 15 et/ou les moyens de repérage (non représentés) sur ces éléments allongés lors du remplissage de la saignée.

On refait enfin la couche de roulement au-dessus de la saignée ainsi remplie.

Lorsque la chaussée C ne comprend pas de couche de roulement, on termine le remplissage de la saignée au moyen du produit susmentionné susceptible de régénérer les qualités de surface nécessaires au trafic automobile.

La présence optionnelle de la nappe 15 permet de répartir les efforts liés à la circulation automobile, et ainsi de limiter les risques de fissuration de la couche de roulement au droit des bords de la saignée 11.

La présence optionnelle de moyens de repérage des éléments allongés 8, 9 permet d'identifier aisément la nature de ces éléments lors d'une ouverture ultérieure de la saignée 11.

Le fait de réaliser la saignée 11 de manière que sa largeur L1 soit légèrement supérieure à celle L2 des éléments allongés 8, 9 permet d'assurer que le matériau de remplissage 13 va bien se placer tout autour de ces éléments.

On se prémunit ainsi de tout risque d'ovalisation de ces éléments sous l'effet des efforts induits par la circulation automobile.

Le fait de placer les éléments allongés 8, 9 à plus de 5 cm de la partie supérieure des couches de structure 3, 5 permet de dissiper les efforts induits par la circulation automobile, et ainsi de limiter les risques d'écrasement des éléments allongés 8, 9.

Dans le cas où l'on réalise une pluralité de saignées parallèles entre elles, le fait de prévoir une distance minimale de 30 cm entre deux saignées consécutives permet d'éviter une fragilisation excessive des couches de structure.

On notera que si la chaussée est du type à couche de roulement et que le nombre de saignées parallèles est relativement important, il peut être plus avantageux d'enlever la couche de roulement sur l'ensemble de la chaussée plutôt qu'au droit de chaque saignée.

Comme on peut le comprendre à la lumière de ce qui précède, dans le procédé selon l'invention, on pose les éléments allongés dans la zone de la chaussée qui est soumise à la circulation des véhicules, ce qui rend cette pose toujours possible, qu'il y ait ou non de bande d'arrêt d'urgence et/ou de terre-plein central, et que cette bande d'arrêt et/ou ce terre-plein soit saturé ou non d'ouvrages enterrés.

Bien entendu, la présente invention n'est pas limitée au mode de réalisation décrit et représenté, fourni à titre d'exemple illustratif et non limitatif.

## Revendications

1. Procédé de pose d'élément(s) allongé(s) (8, 9) destiné(s) à permettre de véhiculer des flux, tels que des fourreaux pour câbles de télécommunications, dans une chaussée (C) comprenant au moins une couche de structure (3, 5) reposant sur un sol d'assise (7), comportant les étapes consistant à :
- réaliser au moins une saignée longitudinale (11) dans ladite couche de structure (3, 5) sans empiéter sur ledit sol d'assise (7),
- déposer ledit (lesdits) élément(s) allongé(s) (8, 9) dans ladite au moins une saignée (11), et à
- remplir au moins partiellement ladite au moins une saignée (11) avec un matériau de rebouchage (13),
**caractérisé en ce qu'**on réalise ladite au moins une saignée (11) dans la zone de roulement de ladite chaussée.

2. Procédé selon la revendication 1 lorsque ladite chaussée comprend uniquement ladite au moins une couche de structure, **caractérisé en ce qu'**il comprend l'étape finale consistant à terminer le remplissage de ladite au moins une saignée au moyen d'un produit susceptible de régénérer les qualités de surface de ladite chaussée nécessaires au trafic automobile.

3. Procédé selon la revendication 1 lorsque ladite chaussée (C) comprend en outre une couche de roulement (1) située au-dessus de ladite au moins une couche de structure (3, 5), **caractérisé en ce qu'**il comprend en outre l'étape préalable consistant à raboter ou scier ladite couche de roulement (1) le long de l'emplacement de ladite au moins une saignée (11), et les étapes finales consistant à remplir complètement ladite au moins une saignée (11) avec ledit matériau de rebouchage (13) et à refaire ladite couche de roulement (1) au-dessus de ladite au moins une saignée (11).

4. Procédé selon la revendication 3, **caractérisé en ce qu'**il comprend l'étape supplémentaire consistant à disposer une nappe (15) d'un matériau choisi dans le groupe comprenant les non-tissés et les matières plastiques au-dessus de ladite au moins une saignée (11) préalablement à la réfection de ladite couche de roulement (1).

5. Procédé selon la revendication 4, **caractérisé en ce qu'**on étend ladite nappe (15) sur une largeur sensiblement égale à deux fois la largeur (L1) de ladite au moins une saignée (11).

6. Procédé selon l'une quelconque des revendications précédentes, **caractérisé en ce qu'**il comprend l'étape supplémentaire consistant à placer des moyens de repérage dudit (desdits) élément(s) allongé(s) (8, 9) préalablement au rebouchage de ladite au moins une saignée (11).

7. Procédé selon l'une quelconque des revendications précédentes, **caractérisé en ce qu'**on réalise ladite au moins une saignée (11) de manière que sa largeur soit légèrement supérieure à celle dudit (desdits) élément(s) allongé(s) (8, 9).

8. Procédé selon l'une quelconque des revendications précédentes, **caractérisé en ce qu'**on réalise ladite au moins une saignée (11) de manière que la hauteur (h) séparant ledit (lesdits) élément(s) allongé(s) (8, 9) de la partie supérieure de ladite au moins une couche de structure (3, 5) soit comprise entre 5 et 20 cm.

9. Procédé selon l'une quelconque des revendications précédentes, **caractérisé en ce qu'**on réalise une pluralité de saignées sensiblement parallèles entre elles dans ladite au moins une couche de structure.

10. Procédé selon la revendication 9, **caractérisé en ce qu'**on espace lesdites saignées d'au moins 30 cm.
